# EUROPEAN PATENT SPECIFICATION

(11) **EP 3 249 976 B1**
(45) Date of publication and mention of the grant of the patent: **20.05.2020**
(21) Application number: 15882332.8
(22) Date of filing: 17.02.2015
(51) Int. Cl.: H04W 48/16, H04W 8/00, H04L 29/08, H04W 48/10, H04W 84/12

(54) **SERVICE DISCOVERY METHOD AND DEVICE IN NEIGHBOR AWARENESS NETWORK**
DIENSTENTDECKUNGSVERFAHREN UND -VORRICHTUNG IN EINEM NACHBARSCHAFTSBEWUSSTSEINSNETZWERK
PROCÉDÉ ET DISPOSITIF DE DÉCOUVERTE DE SERVICE DANS UN RÉSEAU SENSIBLE AU VOISINAGE

(43) Date of publication of application: 29.11.2017
(73) Proprietor: Huawei Technologies Co., Ltd., Longgang District Shenzhen, Guangdong 518129 (CN)
(72) Inventor: PANG, Gaokun, Shenzhen Guangdong 518129 (CN); FANG, Ping, Shenzhen Guangdong 518129 (CN)
(74) Representative: Thun, Clemens
(86) International application number: PCT/CN2015/073224
(87) International publication number: WO 2016/131193

(56) References cited:
- WO-A1-2013/163634
- WO-A1-2014/035603
- CN-A- 104 144 465
- CN-A- 104 159 299
- CN-A- 104 349 285
- US-A1- 2014 293 978
- US-A1- 2014 313 966

## Description

### TECHNICAL FIELD

The present invention prelates to communications technologies, and in particular, to methods and devices for performing service discovery in a neighbor awareness network NAN.

### BACKGROUND

A neighbor awareness network (Neighbor Awareness Network, NAN for short) mechanism is a standard developed by the Wireless Fidelity Wi-Fi Alliance. A function of this standard is to synchronize all devices (that is, NAN devices) that participate in the NAN mechanism if there is no central node, so that the devices perform maintenance and service discovery of the NAN mechanism in a discovery window (Discovery Window, DW for short) specified in the NAN mechanism. Service discovery is implemented by sending a service discovery frame (Service Discovery Frame, SDF for short) message, and the service discovery frame message includes a query message or a broadcast message. Based on information obtained during service discovery, the device may establish a corresponding connection, and then transmit data.

For example, US 2014/0293978A1 refers to a method for operating a seeker device including generating a first seeker truncated hash output from a sought service name, and generating a second seeker truncated hash output from the sought service name, wherein the first seeker truncated hash output and the second seeker truncated hash output are uncorrelated. The method also includes transmitting a first request message including the first seeker truncated hash output, and receiving a first response message from an advertiser device, the first response message including a second advertiser truncated hash output generated from an advertised service name, wherein the first seeker truncated hash output matches a first advertiser truncated hash output generated from the advertised service name.

In the existing NAN 1.0 standard, privacy protection is mainly performed on a service name and a Media Access Control (Media Access Control, MAC for short) address. A method for protecting a service name is as follows: When an NAN device queries or broadcasts a service, the NAN device uses a service identifier corresponding to the service in a message instead of directly using a plaintext of a service name of the service, which effectively prevents leakage of service information about the service; the service identifier is a hash value of the service name. A method for protecting a MAC address is as follows: An NAN device uses a solution of a changing temporary MAC address, or uses a constantly changing interface address as a MAC address. An interface address may change once every 240 discovery windows (Discover Window, DW for short) (about 2 minutes).

In the foregoing process, if the NAN device queries or broadcasts a special service, a service identifier corresponding to the service will become another fixed identifier of the NAN device after being used for a long period, and can be tracked by an eavesdropper; in addition, although an interface address used by the NAN device constantly changes, if the service identifier does not change, the eavesdropper is very likely to correlate an interface address before a change with an interface address after the change according to the fixed and unchanged service identifier so as to implement tracking, and therefore there is a relatively high security risk in the prior art.

### SUMMARY

The invention is defined by the independent claims. Preferred embodiments are set out in the dependent claims. In a first aspect a method for performing service discovery in a neighbor awareness network, NAN, performed by a second device is provided, wherein the second device and a first device are devices in the NAN, the method comprising:
- receiving a service message sent by the first device, wherein the service message comprises a first service identifier, the service message is used to query a service required by the first device or broadcast a service supported by the first device, wherein the first service identifier is dependent on change information and first service information in the NAN, the first service information is information about the service queried by the first device or information about the service supported by the first device, wherein the change information is information that is agreed between the first device and the second device in advance and that dynamically changes, and the change information comprises: global change information in the NAN, or change information of the first device,
   wherein the global change information comprises at least one of:
   an anchor master rank, AMR, a first master rank, first MR, a first random factor, first RF, an anchor master beacon transmission time, AMBTT, a first time synchronization function, first TSF, value, or a cluster grade CG;
      and
   the change information of the first device comprises at least one of:
      a second MR, an interface address, a second TSF value, or a second RF;
- obtaining the change information, and generating a second service identifier according to the change information and second service information, wherein if the first service information is the information about the service supported by the first device, the corresponding second service information is information about a service queried by the second device, or if the first service information is the information about the service queried by the first device, the corresponding second service information is information about a service supported by the second device; and
- matching the first service identifier and the second service identifier, and if the matching succeeds, sending a service response message to the first device.

In a first implementation form of the first aspect the generating the second service identifier according to the change information and the second service information comprises:
Generating a mapping value according to the change information and the second service information, and using the mapping value as the second service identifier; wherein
the second service information comprises: a service name, a hash value of the service name, or a service number of the service name.

In a second implementation form of the first aspect the generating the second service identifier according to the change information and the second service information comprises:
performing a hash operation on parameters including the change information and the second service information.

In a third implementation form of the first aspect the generating the second service identifier according to the change information and the second service information comprises:
Performing an SHA 256 algorithm, which is a hash operation, on parameters including the second service information and the first TSF value.

In a second aspect a method for performing service discovery in a neighbor awareness network, NAN, performed by a first device is provided, wherein the first device and a second device are devices in the NAN, the method comprising:
- obtaining change information in the NAN, and generating a first service identifier according to the change information and first service information, wherein the first service information is information about a service supported by the first device or information about a service queried by the first device, wherein the change information is information that is agreed between the first device and the second device in advance and that dynamically changes, and the change information comprises: global change information in the NAN, or change information of the first device,
   wherein the global change information comprises at least one of:
   an anchor master rank, AMR, a first master rank, first MR, a first random factor, first RF, an anchor master beacon transmission time, AMBTT, a first time synchronization function, first TSF, value, or a cluster grade CG;
      and
   the change information of the first device comprises at least one of:
      a second MR, an interface address, a second TSF value, or a second RF; and
- sending a service message to the second device, wherein the service message comprises the first service identifier, and the service message is used to query the service required by the first device or broadcast the service supported by the first device.

In a first implementation form of the first aspect the generating the first service identifier according to the change information and the first service information comprises:
Generating a mapping value according to the change information and the first service information, and using the mapping value as the first service identifier; wherein
the first service information comprises: a service name, a hash value of the service name, or a service number of the service name.

In a second implementation form of the second aspect the generating the first service identifier according to the change information and the first service information comprises:
performing a hash operation on parameters including the change information and the first service information.

In a third implementation form of the second aspect the generating the first service identifier according to the change information and the first service information comprises:
performing an SHA 256 algorithm, which is a hash operation, on parameters including the first service information and the first TSF value.

In a fourth implementation form of the second aspect the first service identifier comprises multiple service identifiers, and the multiple service identifiers are generated according to different first service information, and are used to query multiple services required by the first device or broadcast multiple services supported by the first device.

In a fifth implementation form of the second aspect, before the sending the service message to the second device, further comprising:
Generating a new interface address, and setting a transmitter address comprised in the service message as the new interface address.

In a third aspect a device for performing service discovery in a neighbor awareness network, NAN, wherein the device is a second device and is configured and intended to perform any of the methods according to the first aspect or its implementation form is provided.

In a fourth aspect a device for performing service discovery in a neighbor awareness network, NAN, is provided, wherein the device is a first device and is configured and intended to perform any of the methods according to the second aspect or its implementation forms.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a first flowchart of Embodiment 1 of a method for performing service discovery in a neighbor awareness network NAN according to the present invention;
FIG. 2 is a second flowchart of Embodiment 1 of a method for performing service discovery in a neighbor awareness network NAN according to the present invention;
FIG. 3 is a flowchart of Embodiment 2 of a method for performing service discovery in a neighbor awareness network NAN according to the present invention;
FIG. 4 is a schematic structural diagram of an embodiment of a device for performing service discovery in a neighbor awareness network NAN according to the present invention;
FIG. 5 is a schematic structural diagram of an embodiment of a device for performing service discovery in a neighbor awareness network NAN according to the present invention;
FIG. 6 is a schematic structural diagram of a first device according to an embodiment of the present invention;
FIG. 7 is a schematic structural diagram of a second device according to an embodiment of the present invention; and
FIG. 8 is a schematic structural diagram of a system according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings. Apparently, the described embodiments are some but not all of the embodiments of the present invention. All other embodiments obtained by a person of ordinary skill in the art based on the embodiments of the present invention without creative efforts shall fall within the protection scope of the present invention, as defined by the appended set of claims.

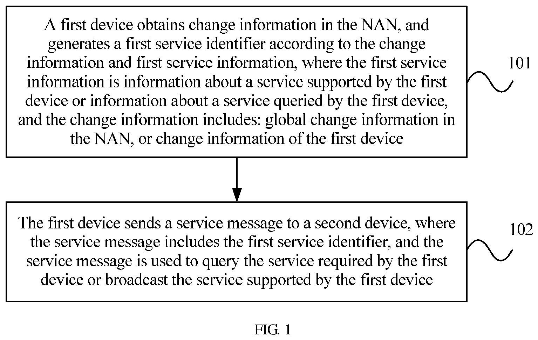

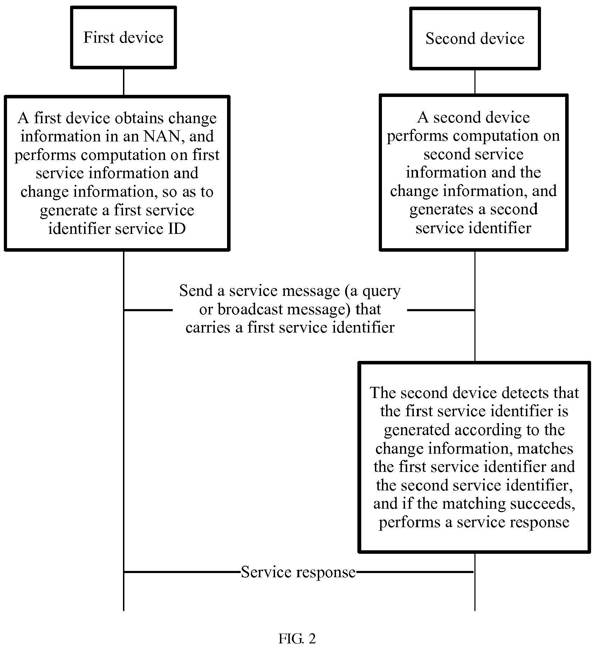

FIG. 1 is a first flowchart of Embodiment 1 of a method for performing service discovery in a neighbor awareness network NAN according to the present invention. FIG. 2 is a second flowchart of Embodiment 1 of a method for performing service discovery in a neighbor awareness network NAN according to the present invention. This embodiment is executed by a first device, and the first device is a device in the NAN. As shown in FIG. 1 and FIG. 2, the method in this embodiment includes:
Step 101: The first device obtains change information in the NAN, and generates a first service identifier according to the change information and first service information, where the first service information is information about a service supported by the first device or information about a service queried by the first device, and the change information includes: global change information in the NAN, or change information of the first device.
Step 102: The first device sends a service message to a second device, where the service message includes the first service identifier, and the service message is used to query the service required by the first device or broadcast the service supported by the first device.

The first device and the second device are devices in the NAN.

Specifically, to prevent leakage of device privacy and prevent a device from being tracked, a service identifier that dynamically changes is used to protect device privacy in this embodiment of the present invention. The first device generates the dynamic first service identifier according to the change information and the first service information. The first service information is the information about the service supported by the first device or the information of the service queried by the first device (that is, the information about the service required by the first device). After generating the first service identifier, the first device sends the service message to the second device. The service message carries the first service identifier. The service message may be a query message, or may be a broadcast message. The first device may send the service message to the second device by means of unicast or broadcast, or by using another device for forwarding. The unicast means that the first device sends the service message to the second device. The broadcast means that the first device sends the service message without a destination, and the second device receives the message; in this case, the second device may be one or more devices that receive the message. Before or after receiving the service message, the second device may generate a second service identifier according to the change information and the second service information, and match the first service identifier and the second service identifier after receiving the service message. If the matching succeeds, the second device may send a service response message to the first device. If the first service information is the information about the service supported by the first device, the corresponding second service information is information about a service queried by the second device; or if the first service information is the information about the service queried by the first device, the corresponding second service information is information about a service supported by the second device.

The foregoing change information may be information that is agreed upon by the first device and the second device in advance and that dynamically changes. That the information is agreed upon in advance may mean that the information is specified in a standard, or is signaled by the first device to the second device.

The change information may include: the global change information in the NAN, or the change information of the first device. For example, the change information may be at least one of the following information: an anchor master rank (Anchor Master Rank, AMR for short), a master rank (Master Rank, MR for short), a master preference (Master Preference, MP for short), an anchor master preference (Anchor Master Preference, AMP for short), a random factor (Random Factor, RF for short), anchor master beacon transmission time (Anchor Master Beacon Transmission Time, AMBTT for short), a time synchronization function (Time Synchronization Function, TSF for short) value, a cluster identifier, a cluster grade (Cluster Grade, CG for short), or an interface address (interface address), or may be all or a portion of some information. The TSF value is obtained according to a time stamp (time stamp) in an SDF, and in daily application, a TSF may be used to replace the TSF value. For example, a service identifier may be generated by using partial information about the TSF value. For example, the service identifier is generated by using last 24 bits of the TSF value.

In this embodiment, a first device obtains change information in the NAN, and generates a first service identifier according to the change information and the first service information, where the first service information is information about a service supported by the first device or information about a service queried by the first device, and the change information includes: global change information in the NAN, or change information of the first device; and the first device sends a service message to a second device, where the service message includes the first service identifier, and the service message is used to query the service required by the first device or broadcast the service supported by the first device. In this way, the first service identifier dynamically changes, which protects privacy of service information of a device, prevents the device from being tracked, and improves security in a service discovery process.

Based on the foregoing Embodiment 1, optionally, the generating a first service identifier according to the change information and the first service information includes:
generating, by the first device, a mapping value according to the change information and the first service information, and using the mapping value as the first service identifier; where
the first service information includes: a service name, or a hash value or a service number of the service name.

Specifically, the first device may determine whether the global change information in the NAN is newly changed, where the global change information is information known to all devices in the NAN; because the first device is synchronized with an AM (Anchor Master), when it is detected that information about the AM changes, it indicates that the global change information has changed. If the global change information has changed, the information about the AM and one or more items of the global change information are processed, for example, a hash operation is performed; or if the global change information has not changed, the change information of the first device may be used. In this way, it can be ensured that the first service identifier dynamically changes, and therefore cannot be tracked by an eavesdropper. The hash operation may be an SHA 256 algorithm.

The first device processes the first service information and the change information, and generates the mapping value. The mapping value may be used as the first service identifier; or partial information about the generated mapping value may be used as the first service identifier; or the generated mapping value may be mapped to a bitmap, a corresponding bit is set to 1, and then the bitmap may be used as the first service identifier; or a Bloom filter (bloom filter) may be used, that is, computation is performed on the first service information and the change information to obtain the first service identifier, computation is performed on the first service identifier and the change information, a computation result and the first service identifier are mapped to a Bloom filter bitmap, and the Bloom filter bitmap obtained after mapping is used as the first service identifier. After receiving the Bloom filter bitmap, the second device performs computation on the second service information and the change information to obtain a second service identifier, performs computation on the second service identifier and the change information, and maps a computation result and the second service identifier to the Bloom filter bitmap. If mapping locations are the same, it indicates that the first service identifier matches the second service identifier. The foregoing service information may be a service name, a hash value of the service name, or a service number of the service name. If the first service information is the information about the service supported by the first device, the corresponding second service information is the information about the service queried by the second device; or if the first service information is the information about the service queried by the first device, the corresponding second service information is the information about the service supported by the second device.

Optionally, the global change information includes at least one of the following information: an anchor master rank AMR, a master rank MR, a master preference MP, an anchor master preference AMP, a random factor RF, anchor master beacon transmission time AMBTT, a time synchronization function TSF value, a cluster identifier, or a cluster grade CG.

Optionally, the change information of the first device includes at least one of the following information: an MR, an interface address, a TSF value, an MP, or an RF.

Specifically, if the change information is the global change information, the first device joins a cluster (cluster) in the NAN (an NAN includes one or more clusters), and is synchronized with an anchor master (Anchor Master, AM for short) in the NAN cluster, so as to obtain global change information of the cluster, and query or broadcast a service. A specific process is as follows: The first device listens to a beacon frame in the cluster in a synchronization process, for example, a synchronization beacon frame (sync beacon) or a discovery beacon frame (discovery beacon), and may obtain information about the cluster from the beacon frame, and use the information about the cluster as the global change information. The global change information may include at least one of the following information: an AMR, an MR, an MP, an AMP, an RF, an AMBTT, a TSF value, a cluster identifier, a CG, or the like. The global change information is known to all devices in the cluster, and changes under a specific condition. When the first service identifier is generated, the global change information may include all or a portion of one information item, or include all of two information, or include a portion of two information, or include all of one information item and a portion of another information item, or include all or a portion of multiple information (that is, all or a portion of at least one information item), which is not limited in the present invention.

When the first device queries or broadcasts a service, the service message that is sent carries the first service identifier.

When the change information is the global change information, computation workload of the second device can be reduced. That is, the second device only needs to compute once according to the global change information, and may determine query or broadcast messages that are sent by different first devices, instead of performing computation multiple times (the second device may obtain the second service identifier by performing computation in advance according to the global change information, or obtain the second service identifier by performing computation after receiving the service message sent by the first device).

When the change information is the global change information, dynamic information in an existing NAN can be reused, Because the global change information is known to all devices in the NAN, and may be obtained after a device joins the NAN, no information needs to be added to an air interface (air interface) message, which reduces overhead of the air interface.

When the change information is the change information of the first device, a process is similar to the foregoing process: The first device joins an NAN cluster, and is synchronized with an AM in the NAN cluster, so as to query or broadcast a service; and the first device generates the change information of the first device, and performs a hash operation on the first service information and the change information of the first device, so as to generate the first service identifier. The change information of the first device is not known to all devices in the NAN, and therefore when the change information of the first device changes, the first device may signal the change to the second device, or the first device carries the change information of the first device in the service message.

The change information of the first device may be a changing temporary MAC address (a constantly changing interface address is used as the MAC address) used by the first device. For example, after 240 DWs, when detecting that the interface address needs to be changed, the first device generates a new interface address as the change information, and then performs a hash operation on the service information and the interface address to generate the first service identifier. In this case, the change information is a constantly changing interface address, and therefore the first service identifier is constantly changing, which may prevent an eavesdropper from correlating the first service identifier with the interface address, and further prevent the device from being tracked.

Optionally, the change information is information that is agreed upon by the first device and the second device in advance and that dynamically changes.

Optionally, the service message is used to query the service required by the first device or broadcast the service supported by the first device.

Optionally, the service message further includes indication information, and the indication information is used to indicate that the first service identifier dynamically changes.

Optionally, the indication information is further used to indicate that the first service identifier is generated according to the global change information or generated according to the change information of the first device.

Optionally, the first service identifier includes multiple service identifiers, and the multiple service identifiers are generated according to different first service information, and are used to query multiple services required by the first device or broadcast multiple services supported by the first device.

A specific implementation manner is as follows:
The first device generates multiple service identifiers according to different first service information, and uses the multiple service identifiers as the first service identifier to send to the second device. The multiple service identifiers are generated according to different first service information and are used to query the multiple services required by the first device or broadcast the multiple services supported by the first device.

Alternatively, the first device generates the first service identifier according to different first service information, where the first service identifier is in a form of a bitmap (bitmap). In a process in which the first service identifier is generated, different first service information is mapped to different bits in the bitmap after computation is performed; that is, different bits represent different service identifiers. The bitmap may be specifically a Bloom filter bitmap. The first service identifier is used to query the multiple services required by the first device or broadcast the multiple services supported by the first device.

Specifically, the change information may be information that is agreed upon (for example, information specified in a standard, where for example, it may be specified in the standard that a service identifier is generated by using partial information about a TSF value, for example, by using last 24 bits of the TSF value) by the first device and the second device in advance and that dynamically changes, or be information signaled by the first device to the second device by using indication information carried in the service message. The indication information is used to indicate that the first service identifier dynamically changes; further and optionally, the indication information is further used to indicate that the first service identifier is generated according to the global change information or generated according to the change information of the first device.

When obtaining the first service identifier, the first device performs computation on both the first service information (such as a service name) and the global change information to generate a mapping value, and uses the mapping value as the first service identifier, so as to ensure that the first service identifier is dynamic.

For example, the first device may perform a hash operation on the first service information and the TSF value; or perform a hash operation on the first service information and partial information about the TSF value; or perform a hash operation on a hash value of the first service information and the TSF value; or perform a hash operation on the hash value of the first service information and partial information about the TSF value; or perform a hash operation on the first service information, the TSF value, and an AMR; or perform a hash operation on the first service information, partial information about the TSF value, and partial information about the AMR; or perform a hash operation on partial information about the hash value of the first service information, partial information about the TSF value, and partial information about the AMR; or perform a hash operation on partial information about the hash value of the first service information and partial information about the TSF value.

The service message may be a subscription (subscribe) message or a broadcast (publish) message in an SDF in a current NAN, or a new frame defined based on a public action frame (public action frame) in IEEE 802.11, or certainly, may also be another existing frame or a newly defined frame.

When an SDF frame is used, a service identifier in an original SDF frame format in the SDF frame (an original service identifier is included in an NAN attribute in the SDF frame) is directly replaced with a newly generated dynamic first service identifier. There may be multiple first service identifiers; for example, when service information that is queried or broadcast is service information of multiple services, there are multiple corresponding first service identifiers.

The indication information may be included in an SDF in a current NAN, or included in a new frame defined based on a public action frame in IEEE 802.11, or certainly, may be included in another existing frame or a newly defined frame.

As shown in the following Table 1, when the SDF frame is used, an NAN attribute in the original SDF frame format is directly modified in the SDF frame, and a new field may be added to the SDF frame. For example, the indication information in the foregoing embodiment may be an attribute identifier, and indicate that the first service identifier dynamically changes. A size of the field may be 1 bit, and the field indicates whether the first service identifier changes; for example, 1 represents a change, and 0 represents no change. The NAN attribute further includes a length field that is used to describe length information of the first service identifier.

**Table 1**

| **Field** | **Size (byte)** | **Specific value** | **Description** |
|---|---|---|---|
| Attribute identifier | 1 | Unfixed | This field represents a dynamic first service identifier. |
| Length | 2 | Unfixed | Length information |
| First service identifier | 6^{∗}N | Unfixed | There are one or more first service identifiers, where N is a quantity of the first service identifiers. |

As shown in the following Table 2, the indication information is further used to indicate that the first service identifier is generated according to the global change information or generated according to the change information of the first device. Specifically, an indication information field is added to the NAN attribute, and a length of the indication information field may be one or more bytes. The indication information field may indicate change times of the first service identifier; and/or indicate that the first service identifier is generated according to the global change information or generated according to the change information of the first device; and/or indicate specific information that is used by the first device to generate the first service identifier.

**Table 2**

| **Field** | **Size (byte)** | **Specific value** | **Description** |
|---|---|---|---|
| Attribute identifier | 1 | Unfixed | This field represents a dynamic first service identifier. |
| Length | 2 | Unfixed | Length information |
| Indication information | One or more | Unfixed | This field indicates change times of the first service identifier; and/or indicates that the first service identifier is generated according to the global change information or generated according to the change information of the first device. |
| First service identifier | 6^{∗}N | Unfixed | There are one or more first service identifiers, where N is a quantity of the first service identifiers. |

Optionally, before the sending, by the first device, a service message to a second device, the method further includes:
generating, by the first device, a new interface address, and setting a transmitter address included in the service message as the new interface address.

Specifically, the first device may further change an interface address of the first device before or after generating the first service identifier to prevent the interface address from being tracked, and set a transmitter address (Transmitter address, TA for short) as the interface address. The service message includes the interface address.

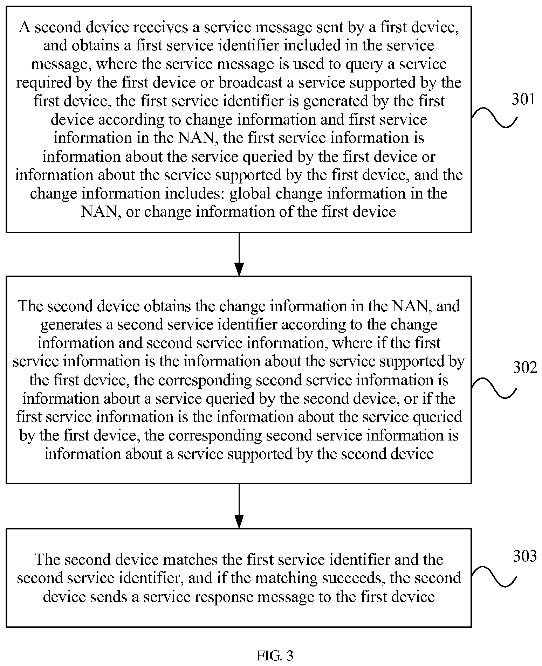

FIG. 3 is a flowchart of Embodiment 2 of a method for performing service discovery in a neighbor awareness network NAN according to the present invention. This embodiment is executed by a second device, where the second device is a device in an NAN. As shown in FIG. 3, the method in this embodiment includes:
Step 301: The second device receives a service message sent by a first device, where the service message includes a first service identifier, the service message is used to query a service required by the first device or broadcast a service supported by the first device, the first service identifier is generated by the first device according to change information and first service information in the NAN, the first service information is information about the service queried by the first device or information about the service supported by the first device, and the change information includes: global change information in the NAN, or change information of the first device.

Step 302: The second device obtains the change information in the NAN, and generates a second service identifier according to the change information and second service information, where if the first service information is the information about the service supported by the first device, the corresponding second service information is information about a service queried by the second device, or if the first service information is the information about the service queried by the first device, the corresponding second service information is information about a service supported by the second device.

Step 303: The second device matches the first service identifier and the second service identifier, and if the matching succeeds, the second device sends a service response message to the first device.

The first device and the second device are devices in the NAN.

Specifically, as shown in FIG. 2 and FIG. 3, to prevent leakage of device privacy and prevent a device from being tracked, a service identifier that dynamically changes is used to protect device privacy in this embodiment of the present invention. The first device generates the dynamic first service identifier according to the change information and the first service information. The first service information is the information about the service supported by the first device or the information of the service queried by the first device (that is, the information about the service required by the first device). After generating the first service identifier, the first device sends the service message to the second device. The service message carries the first service identifier. The service message may be a query message, or may be a broadcast message. The second device generates a second service identifier according to the change information and the second service information, and matches the first service identifier and the second service identifier. If the matching succeeds, the second device may send the service response message to the first device. If the first service information is the information about the service supported by the first device, the corresponding second service information is the information about the service queried by the second device; or if the first service information is the information about the service queried by the first device, the corresponding second service information is the information about the service supported by the second device.

It should be noted that there is no sequence between step 301 and step 302.

The foregoing change information may be information that is agreed upon by the first device and the second device in advance and that dynamically changes, or may be signaled by the first device to the second device.

The change information includes: the global change information in the NAN, or the change information of the first device. For example, the change information may be at least one of the following information: an anchor master rank AMR, a master rank MR, a master preference MP, an anchor master preference AMP, a random factor RF, anchor master beacon transmission time AMBTT, a time synchronization function TSF value, a cluster identifier, a cluster grade CG**,** or an interface address, or may be all or a portion of some information.

In this embodiment, a second device receives a service message sent by a first device, where the service message includes a first service identifier, and the service message is used to query a service required by the first device or broadcast a service supported by the first device; the second device obtains change information, and generates a second service identifier according to the change information and second service information, where the second service information is information about a service supported by the second device, or information about a service queried by the second device, and the change information includes: global change information in the NAN, or change information of the first device; and the second device matches the first service identifier and the second service identifier. In this way, the first service identifier dynamically changes, which protects privacy of service information of a device, prevents the device from being tracked, and improves security in a service discovery process.

Based on the foregoing embodiment, optionally, the generating a second service identifier according to the change information and the second service information includes:
generating, by the second device, a mapping value according to the change information and the second service information, and using the mapping value as the second service identifier; where
the second service information includes: a service name, a hash value of the service name, or a service number of the service name.

Specifically, the foregoing process is similar to that of Embodiment 1, and details are not described herein again. The foregoing service information is the information about the service required by the second device, or the information about the service supported by the second device.

Optionally, the first service identifier includes multiple service identifiers, and the multiple service identifiers are generated according to different first service information and are used to query or broadcast multiple services.

Optionally, the matching, by the second device, the first service identifier and the second service identifier includes:
if the first service identifier is the same as the second service identifier, determining that the matching succeeds; or
if the first service identifier is different from the second service identifier, determining that the matching fails.

Specifically, it is only required to compare the second service identifier generated by the second device independently with the received first service identifier, and if they are the same, it indicates that the matching succeeds; or if they are not the same, it indicates that the matching fails. If the matching succeeds, a service response message is sent, or, a detailed query is initiated, or, a data communication connection is initiated, or the like. The second service identifier may also include multiple service identifiers.

Optionally, the global change information includes at least one of the following information: an anchor master rank AMR, a master rank MR, a master preference MP, an anchor master preference AMP, a random factor RF, anchor master beacon transmission time AMBTT, a time synchronization function TSF value, a cluster identifier, or a cluster grade CG.

Optionally, the change information of the first device includes at least one of the following information: an MR, an interface address, a TSF value, an MP, or an RF.

Specifically, if the change information is the global change information, the second device joins a cluster in the NAN, and is synchronized with an AM in the NAN cluster, so as to obtain global change information of the cluster, and query or broadcast a service. A specific process is as follows: The second device listens to a beacon frame in the cluster in a synchronization process, for example, a synchronization beacon frame (sync beacon) or a discovery beacon frame (discovery beacon), may obtain information about the cluster from the beacon frame, and use the information about the cluster as the global change information. The global change information may include at least one of the following information: an AMR, an MR, an MP, an AMP, an RF, an AMBTT, a TSF value, a cluster identifier, a CG, or the like. The information is known to all devices in the cluster, and changes under a specific condition.

When the change information is the global change information, computation workload of the second device can be reduced. That is, the second device only needs to compute once according to the global change information, and may determine query or broadcast messages that are sent by different first devices, instead of performing computation multiple times (the second device may obtain the second service identifier by performing computation in advance according to the global change information, or obtain the second service identifier by performing computation after receiving the service message sent by the first device).

When the change information is the change information of the first device, the second device obtains the change information of the first device, and performs computation on the second service information and the change information of the first device, so as to generate the second service identifier.

Optionally, the change information is information that is agreed upon by the first device and the second device in advance and that dynamically changes.

Optionally, the service message further includes indication information, and the indication information is used to indicate that the first service identifier dynamically changes.

Optionally, the indication information is further used to indicate that the first service identifier is generated according to the global change information or generated according to the change information of the first device.

Optionally, the obtaining, by the second device, the change information includes:
obtaining, by the second device, the change information before receiving the service message sent by the first device, or obtaining the change information after receiving the service message sent by the first device.

Optionally, the second service identifier includes multiple service identifiers, and the multiple service identifiers are generated according to different second service information, and are used to query services required by the second device or broadcast services supported by the second device.

For example, the multiple service identifiers are generated according to different second service information.

When the multiple service identifiers of the second device match all the multiple service identifiers of the first device, the second device sends the response message to the first device. If the multiple service identifiers of the second device do not match all the multiple service identifiers of the first device, the second device does not send the response message.

When the multiple service identifiers of the second device match some of the multiple service identifiers of the first device, the second device sends the response message to the first device. That the multiple service identifiers of the second device match some of the multiple service identifiers of the first device means that the second device supports only some of the multiple services queried by the first device, or that the first device supports only some of the multiple services queried by the second device.

The response message may further indicate that the second device supports only some of the services.

Optionally, the second device receives the first service identifier sent by the first device, and the first service identifier is in a form of a bitmap (bitmap).

Specifically, the second device checks whether a bit in the bitmap of the first service identifier is the same as a bit in a corresponding location in a bitmap of the second service identifier (for example, both are 1) according to different bits that are mapped to the bitmap after computation is performed based on different second service information. If bits of corresponding locations are 1, it indicates that the service information matches with each other.

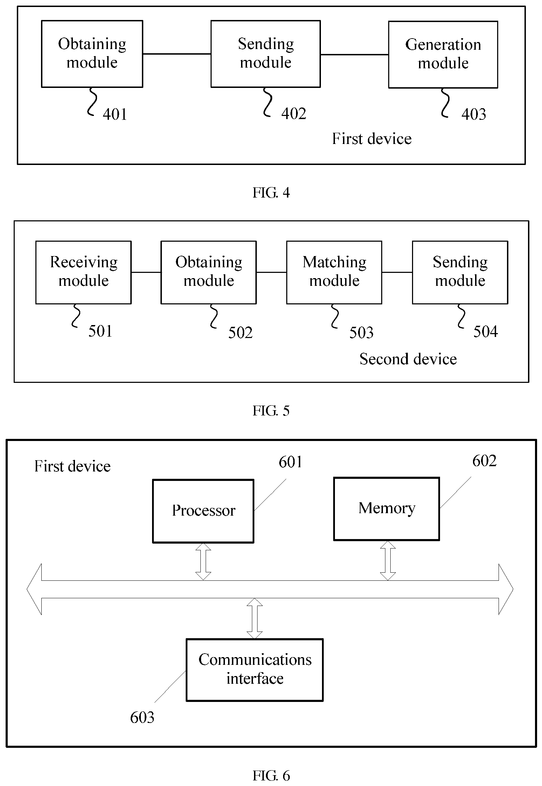

FIG. 4 is a schematic structural diagram of an embodiment of a device for performing service discovery in a neighbor awareness network NAN according to the present invention. As shown in FIG. 4, this embodiment provides the device for performing the service discovery in the neighbor awareness network NAN, where the device is a first device, and the first device includes: an obtaining module 401 and a sending module 402. The obtaining module 401 is configured to obtain change information in the NAN, and generate a first service identifier according to the change information and first service information, where the first service information is information about a service supported by the first device or information about a service queried by the first device, and the change information includes: global change information in the NAN, or change information of the first device.

The sending module 402 is configured to send a service message to a second device, where the service message includes the first service identifier, and the service message is used to query the service required by the first device or broadcast the service supported by the first device.

The first device and the second device are devices in the NAN.

Optionally, the obtaining module 401 is specifically configured to:
generate a mapping value according to the change information and the first service information, and use the mapping value as the first service identifier; where
the first service information includes: a service name, a hash value of the service name, or a service number of the service name.

Optionally, the global change information includes at least one of the following information: an anchor master rank AMR, a master rank MR, a master preference MP, an anchor master preference AMP, a random factor RF, anchor master beacon transmission time AMBTT, a time synchronization function TSF value, a cluster identifier, or a cluster grade CG.

Optionally, the change information of the first device includes at least one of the following information: an MR, an interface address, a TSF value, an MP, or an RF.

Optionally, the change information is information that is agreed upon by the first device and the second device in advance and that dynamically changes.

Optionally, the service message further includes indication information, and the indication information is used to indicate that the first service identifier dynamically changes.

Optionally, the indication information is further used to indicate that the first service identifier is generated according to the global change information or generated according to the change information of the first device.

Optionally, the first service identifier includes multiple service identifiers, and the multiple service identifiers are generated according to different first service information, and are used to query multiple services required by the first device or broadcast multiple services supported by the first device.

Optionally, the device further includes:
a generation module 403, configured to generate a new interface address, and set a transmitter address included in the service message as the new interface address.

The first device in this embodiment may be configured to execute the technical solution in the method embodiment shown in FIG. 1. Implementation principles and technical effects are similar, and details are not repeated herein.

FIG. 5 is a schematic structural diagram of an embodiment of a device for performing service discovery in a neighbor awareness network NAN according to the present invention. As shown in FIG. 5, this embodiment provides the device for performing the service discovery in the neighbor awareness network NAN, where the device is a second device, and the second device includes: a receiving module 501, an obtaining module 502, a matching module 503, and a sending module 504. The receiving module 501 is configured to receive a service message sent by a first device, where the service message includes a first service identifier, the service message is used to query a service required by the first device or broadcast a service supported by the first device, the first service identifier is generated by the first device according to change information and first service information in the NAN, the first service information is information about the service queried by the first device or information about the service supported by the first device, and the change information includes: global change information in the NAN, or change information of the first device.

The obtaining module 502 is configured to obtain the change information in the NAN, and generate a second service identifier according to the change information and second service information, where if the first service information is the information about the service supported by the first device, the corresponding second service information is information about a service queried by the second device, or if the first service information is the information about the service queried by the first device, the corresponding second service information is information about a service supported by the second device. The matching module 503 is configured to match the first service identifier and the second service identifier. The sending module 504 is configured to: if the matching succeeds, send a service response message to the first device.

The first device and the second device are devices in the NAN.

Optionally, the obtaining module 502 is specifically configured to:
generate a mapping value according to the change information and the second service information, and use the mapping value as the second service identifier; where
the second service information includes: a service name, a hash value of the service name, or a service number of the service name.

Optionally, the global change information includes at least one of the following information: an anchor master rank AMR, a master rank MR, a master preference MP, an anchor master preference AMP, a random factor RF, anchor master beacon transmission time AMBTT, a time synchronization function TSF value, a cluster identifier, or a cluster grade CG.

Optionally, the change information of the first device includes at least one of the following information: an MR, an interface address, a TSF value, an MP, or an RF.

Optionally, the change information is information that is agreed upon by the first device and the second device in advance and that dynamically changes.

Optionally, the service message further includes indication information, and the indication information is used to indicate that the first service identifier dynamically changes.

Optionally, the indication information is further used to indicate that the first service identifier is generated according to the global change information or generated according to the change information of the first device.

Optionally, the second service identifier includes multiple service identifiers, and the multiple service identifiers are generated according to different second service information, and are used to query multiple services required by the second device or broadcast multiple services supported by the second device.

The second device in this embodiment may be configured to execute the technical solution in the method embodiment shown in FIG. 3. Implementation principles and technical effects are similar, and details are not repeated herein.

FIG. 6 is a schematic structural diagram of a first device according to an embodiment of the present invention. As shown in FIG. 6, the first device provided in this embodiment includes a processor 601, a memory 602, and a communications interface 603. The processor 601, the memory 602, and the communications interface 603 are interconnected by using a bus.

In this embodiment, the communications interface 603 may be specifically a transmitter, and further and optionally, may further include a receiver. The transmitter is configured to send a message or data, and the receiver is configured to receive the message or the data.

The processor 601 runs a program stored in the memory 602, so as to perform the following operations:
obtaining change information in the NAN, and generating a first service identifier according to the change information and the first service information, where the first service information is information about a service supported by the first device or information about a service queried by the first device, and the change information includes: global change information in the NAN, or change information of the first device.

The transmitter is configured to send a service message to a second device, where the service message includes the first service identifier, and the service message is used to query the service required by the first device or broadcast the service supported by the first device.

The first device and the second device are devices in the NAN.

Optionally, the processor 601 is specifically configured to:
generate a mapping value according to the change information and the first service information, and use the mapping value as the first service identifier; where
the first service information includes: a service name, a hash value of the service name, or a service number of the service name.

Optionally, the global change information includes at least one of the following information: an anchor master rank AMR, a master rank MR, a master preference MP, an anchor master preference AMP, a random factor RF, anchor master beacon transmission time AMBTT, a time synchronization function TSF value, a cluster identifier, or a cluster grade CG.

Optionally, the change information of the first device includes at least one of the following information: an MR, an interface address, a TSF value, an MP, or an RF.

Optionally, the change information is information that is agreed upon by the first device and the second device in advance and that dynamically changes.

Optionally, the service message further includes indication information, and the indication information is used to indicate that the first service identifier dynamically changes.

Optionally, the indication information is further used to indicate that the first service identifier is generated according to the global change information or generated according to the change information of the first device.

Optionally, the first service identifier includes multiple service identifiers, and the multiple service identifiers are generated according to different first service information, and are used to query multiple services required by the first device or broadcast multiple services supported by the first device.

The device provided in this embodiment is applied in the method for performing the service discovery in the neighbor awareness network NAN.

The device in this embodiment is configured to execute the technical solution that is provided in the method embodiment shown in FIG. 1 and the technical solutions provided in the method embodiments related to FIG. 1 in the present invention. Implementation principles and technical effects are similar. Refer to the method embodiment shown in FIG. 1 and the method embodiment related to FIG. 1; details are not described herein again.

The memory 602 stores a program. Specifically, the program may include program code, where the program code includes a computer operation instruction. The memory 602 may include a random access memory (random access memory, RAM for short), or may further include a non-volatile memory (non-volatile memory), for example, at least one disk memory.

The processor 601 may be a general-purpose processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA) or another programmable logic device, a discrete gate or a transistor logic device, or a discrete hardware component.

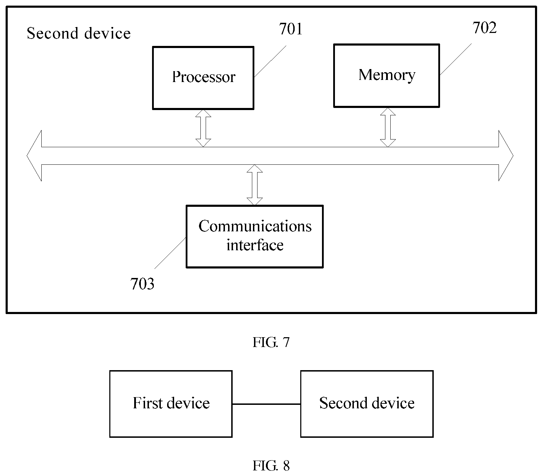

FIG. 7 is a schematic structural diagram of a second device according to an embodiment of the present invention. As shown in FIG. 7, the second device provided in this embodiment includes a processor 701, a memory 702, and a communications interface 703. The processor 701, the memory 702, and the communications interface 703 are interconnected by using a bus.

In this embodiment, the communications interface 703 may be specifically a receiver, and further and optionally, may further include a transmitter. The transmitter is configured to send a message or data, and the receiver is configured to receive the message or the data.

The memory 702 stores a program. Specifically, the program may include program code, where the program code includes a computer operation instruction. The memory 702 may include a RAM, and may also include a non-volatile memory, for example, at least one disk memory.

The receiver is configured to receive a service message sent by a first device, where the service message includes a first service identifier, the service message is used to query a service required by the first device or broadcast a service supported by the first device, the first service identifier is generated by the first device according to change information and first service information in the NAN, the first service information is information about the service queried by the first device or information about the service supported by the first device, and the change information includes: global change information in the NAN, or change information of the first device.

The processor 701 runs a program stored in the memory 702, so as to perform the following operations:
obtaining the change information in the NAN, and generating a second service identifier according to the change information and the second service information, where if the first service information is the information about the service supported by the first device, the corresponding second service information is information about a service queried by the second device, or if the first service information is the information about the service queried by the first device, the corresponding second service information is information about a service supported by the second device, the second service information is the information about the service supported by the second device, or the information about the service queried by the second device, and the change information includes: the global change information in the NAN, or the change information of the first device; and
matching, by the second device, the first service identifier and the second service identifier, and if the matching succeeds, sending, by the second device, a service response message to the first device, where the service response message may be specifically sent by using the transmitter; where
the first device and the second device are devices in the NAN.

Optionally, the processor 701 is specifically configured to:
generate a mapping value according to the change information and the second service information, and use the mapping value as the second service identifier; where
the second service information includes: a service name, a hash value of the service name, or a service number of the service name.

Optionally, the global change information includes at least one of the following information: an anchor master rank AMR, a master rank MR, a master preference MP, an anchor master preference AMP, a random factor RF, anchor master beacon transmission time AMBTT, a time synchronization function TSF value, a cluster identifier, or a cluster grade CG.

Optionally, the change information of the first device includes at least one of the following information: an MR, an interface address, a TSF value, an MP, or an RF.

Optionally, the change information is information that is agreed upon by the first device and the second device in advance and that dynamically changes.

Optionally, the service message further includes indication information, and the indication information is used to indicate that the first service identifier dynamically changes.

Optionally, the indication information is further used to indicate that the first service identifier is generated according to the global change information or generated according to the change information of the first device.

Optionally, the second service identifier includes multiple service identifiers, and the multiple service identifiers are generated according to different second service information, and are used to query multiple services required by the second device or broadcast multiple services supported by the second device.

The device provided in this embodiment is applied in the method for performing the service discovery in the neighbor awareness network NAN.

The device in this embodiment is configured to execute the technical solution that is provided in the method embodiment shown in FIG. 3 and the technical solutions provided in the method embodiments related to FIG. 3 in the present invention. Implementation principles and technical effects are similar. Refer to the method embodiment shown in FIG. 3 and the method embodiments related to FIG. 3; details are not described herein again.

The processor 701 may be a general-purpose processor, including a central processing unit CPU, an NP, and the like; or may be a DSP, an ASIC, an FPGA or another programmable logic device, a discrete gate or a transistor logic device, or a discrete hardware component.

FIG. 8 is a schematic structural diagram of a system according to an embodiment of the present invention. As shown in FIG. 8, the system according to this embodiment of the present invention includes: a first device and a second device. The first device may use the structure of the first device in FIG. 4 or FIG. 6, and correspondingly, may execute the technical solution in the method embodiment shown in FIG. 1; implementation principles and technical effects are similar, and details are not described herein again. The second device may use the structure of the second device in FIG. 5 or FIG. 7, and correspondingly, may execute the technical solution in the method embodiment shown in FIG. 3; implementation principles and technical effects are similar, and details are not described herein again.

In the several embodiments provided in the present application, it should be understood that the disclosed device and method may be implemented in other manners. For example, the described device embodiment is merely exemplary. For example, the unit or module division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one position, or may be displayed as modules may or may not be physical modules, may be located in one position, or may be distributed on a plurality of network units. Some or all of the modules may be selected according to actual needs to achieve the objectives of the solutions of the embodiments.

Persons of ordinary skill in the art may understand that all or some of the steps in the method embodiments may be implemented by a program instructing relevant hardware. The program may be stored in a computer-readable storage medium. When the program runs, the steps in the method embodiments are performed. The foregoing storage medium includes: any medium that can store program code, such as a ROM, a RAM, a magnetic disk, or an optical disc.

It should be noted that in this specification, relational terms such as "first" and "second" are only used to distinguish one entity or operation from another, and do not necessarily require or imply that any actual relationship or sequence exists between these entities or operations.

## Claims

1. A method for performing service discovery in a neighbor awareness network, NAN, performed by a second device, wherein the second device and a first device are devices in the NAN, the method comprising:
• receiving (301) a service message sent by the first device, wherein the service message comprises a first service identifier, the service message is used to query a service required by the first device or broadcast a service supported by the first device, wherein the first service identifier is dependent on change information and first service information in the NAN, the first service information is information about the service queried by the first device or information about the service supported by the first device, wherein the change information is information that is agreed between the first device and the second device in advance and that dynamically changes, and the change information comprises: global change information in the NAN, or change information of the first device, wherein the global change information comprises at least one of:
an anchor master rank, AMR, a first master rank, first MR, a first random factor, first RF, an anchor master beacon transmission time, AMBTT, a first time synchronization function, first TSF, value, or a cluster grade CG;
and
the change information of the first device comprises at least one of:
a second MR, an interface address, a second TSF value, or a second RF;
• obtaining (302) the change information, and generating a second service identifier according to the change information and second service information, wherein if the first service information is the information about the service supported by the first device, the corresponding second service information is information about a service queried by the second device, or if the first service information is the information about the service queried by the first device, the corresponding second service information is information about a service supported by the second device; and
• matching (303) the first service identifier and the second service identifier, and if the matching succeeds, sending a service response message to the first device.

2. The method according to claim 1, wherein the generating the second service identifier according to the change information and the second service information comprises:
Generating a mapping value according to the change information and the second service information, and using the mapping value as the second service identifier; wherein
the second service information comprises: a service name, a hash value of the service name, or a service number of the service name.

3. The method according to anyone of claims 1 to 2, wherein the generating the second service identifier according to the change information and the second service information comprises:
performing a hash operation on parameters including the change information and the second service information.

4. The method according to anyone of claims 1 to 3, wherein the generating the second service identifier according to the change information and the second service information comprises:
Performing an SHA 256 algorithm, which is a hash operation, on parameters including the second service information and the first TSF value.

5. A method for performing service discovery in a neighbor awareness network, NAN, performed by a first device, wherein the first device and a second device are devices in the NAN, the method comprising:
• obtaining (101) change information in the NAN, and generating a first service identifier according to the change information and first service information, wherein the first service information is information about a service supported by the first device or information about a service queried by the first device, wherein the change information is information that is agreed between the first device and the second device in advance and that dynamically changes, and the change information comprises: global change information in the NAN, or change information of the first device, wherein the global change information comprises at least one of:
an anchor master rank, AMR, a first master rank, first MR, a first random factor, first RF, an anchor master beacon transmission time, AMBTT, a first time synchronization function, first TSF, value, or a cluster grade CG;
and
the change information of the first device comprises at least one of:
a second MR, an interface address, a second TSF value, or a second RF; and
• sending (102) a service message to the second device, wherein the service message comprises the first service identifier, and the service message is used to query the service required by the first device or broadcast the service supported by the first device.

6. The method according to claim 5, wherein the generating the first service identifier according to the change information and the first service information comprises:
generating a mapping value according to the change information and the first service information, and using the mapping value as the first service identifier; wherein
the first service information comprises: a service name, a hash value of the service name, or a service number of the service name.

7. The method according to anyone of claims 5 to 6, wherein the generating the first service identifier according to the change information and the first service information comprises:
performing a hash operation on parameters including the change information and the first service information.

8. The method according to anyone of claims 5 to 7, wherein the generating the first service identifier according to the change information and the first service information comprises:
performing an SHA 256 algorithm, which is a hash operation, on parameters including the first service information and the first TSF value.

9. The method according to any one of claims 5 to 8, wherein the first service identifier comprises multiple service identifiers, and the multiple service identifiers are generated according to different first service information, and are used to query multiple services required by the first device or broadcast multiple services supported by the first device.

10. The method according to any one of claims 5 - 9, before the sending the service message to the second device, further comprising:
Generating a new interface address, and setting a transmitter address comprised in the service message as the new interface address.

11. A device for performing service discovery in a neighbor awareness network, NAN, wherein the device is a second device and is configured and intended to perform any of the methods according to claims 1 - 4.

12. A device for performing service discovery in a neighbor awareness network, NAN, wherein the device is a first device and is configured and intended to perform any of the methods according to claims 5 - 10.

## Patentansprüche

1. Verfahren zum Ausführen einer Diensterkennung in einem Nachbarwahrnehmungsnetzwerk (Neighbor Awareness Network, NAN), das von einer zweiten Vorrichtung ausgeführt wird, wobei die zweite Vorrichtung und eine erste Vorrichtung Vorrichtungen in dem NAN sind, wobei das Verfahren umfasst:
• Empfangen (301) einer Dienstnachricht, die von der ersten Vorrichtung gesendet wird, wobei die Dienstnachricht eine erste Dienstkennung umfasst, wobei die Dienstnachricht verwendet wird, um einen Dienst anzufragen, der von der ersten Vorrichtung benötigt wird, oder einen Dienst zu verbreiten, der von der ersten Vorrichtung unterstützt wird, wobei die erste Dienstkennung abhängig ist von Änderungsinformationen und von ersten Dienstinformationen in dem NAN, wobei die ersten Dienstinformationen Informationen über den Dienst sind, der von der ersten Vorrichtung angefragt wird, oder Informationen über den Dienst sind, der von der ersten Vorrichtung unterstützt wird, wobei die Änderungsinformationen Informationen sind, die zwischen der ersten Vorrichtung und der zweiten Vorrichtung vorab vereinbart wurden und die sich dynamisch verändern, und wobei die Änderungsinformationen umfassen: globale Änderungsinformationen in dem NAN, oder Änderungsinformationen der ersten Vorrichtung,
wobei die globalen Änderungsinformationen mindestens eines umfassen von: einem Anker-Masterrang (Anchor Master Rank, AMR); einem ersten Masterrang (first Master Rank), erster MR; einem ersten Zufallsfaktor (first Random Factor), erster RF; einer Übertragungszeit eines Anker-Masterbeacons, (Anchor Master Beacon Transmission Time, AMBTT); einem ersten Zeitsynchronisationsfunktionswert (first Time Synchronization Function value, erster TSF-Wert); oder einem Cluster-Grad, CG; und
wobei die Änderungsinformationen der ersten Vorrichtung mindestens eines umfassen von: einem zweiten MR; einer Schnittstellenadresse; einem zweiten TSF-Wert; oder einem zweiten RF;
• Erhalten (302) der Änderungsinformationen, und Erzeugen einer zweiten Dienstkennung gemäß den Änderungsinformationen und gemäß zweiten Dienstinformationen, wobei, wenn die ersten Dienstinformationen die Informationen über den Dienst sind, der von der ersten Vorrichtung unterstützt wird, die entsprechenden zweiten Dienstinformationen Informationen über einen Dienst sind, der von der zweiten Vorrichtung angefragt wird, oder wenn die ersten Dienstinformationen die Informationen über den Dienst sind, der von der ersten Vorrichtung angefragt wird, die entsprechenden zweiten Dienstinformationen Informationen über einen Dienst sind, der von der zweiten Vorrichtung unterstützt wird; und
• Abgleichen (303) der ersten Dienstkennung und der zweiten Dienstkennung, und wenn das Abgleichen erfolgreich ist, Senden einer Dienstantwortnachricht an die erste Vorrichtung.

2. Verfahren nach Anspruch 1, wobei das Erzeugen der zweiten Dienstkennung gemäß den Änderungsinformationen und gemäß den zweiten Dienstinformationen umfasst:
Erzeugen eines Zuordnungswerts gemäß den Änderungsinformationen und gemäß den zweiten Dienstinformationen; und Verwenden des Zuordnungswerts als die zweite Dienstkennung; wobei
die zweiten Dienstinformationen umfassen: einen Dienstnamen; einen Hashwert des Dienstnamens; oder eine Dienstnummer des Dienstnamens.

3. Verfahren nach einem der Ansprüche 1 bis 2, wobei das Erzeugen der zweiten Dienstkennung gemäß den Änderungsinformationen und gemäß den zweiten Dienstinformationen umfasst:
Ausführen einer Hash-Operation an Parametern, welche die Änderungsinformationen und die zweiten Dienstinformationen aufweisen.

4. Verfahren nach einem der Ansprüche 1 bis 3, wobei das Erzeugen der zweiten Dienstkennung gemäß den Änderungsinformationen und gemäß den zweiten Dienstinformationen umfasst:
Ausführen eines SHA-256-Algorithmus, der eine Hash-Operation ist, an Parametern, welche die zweiten Dienstinformationen und den ersten TSF-Wert aufweisen.

5. Verfahren zum Ausführen einer Diensterkennung in einem Nachbarwahrnehmungsnetzwerk (Neighbor Awareness Network, NAN), das von einer ersten Vorrichtung ausgeführt wird, wobei die erste Vorrichtung und eine zweite Vorrichtung Vorrichtungen in dem NAN sind, wobei das Verfahren umfasst:
• Erhalten (101) von Änderungsinformationen in dem NAN, und Erzeugen einer ersten Dienstkennung gemäß den Änderungsinformationen und gemäß ersten Dienstinformationen, wobei die ersten Dienstinformationen Informationen über einen Dienst sind, der von der ersten Vorrichtung unterstützt wird, oder Informationen über einen Dienst sind, der von der ersten Vorrichtung angefragt wird, wobei die Änderungsinformationen Informationen sind, die zwischen der ersten Vorrichtung und der zweiten Vorrichtung vorab vereinbart wurden und die sich dynamisch verändern, und wobei die Änderungsinformationen umfassen: globale Änderungsinformationen in dem NAN oder Änderungsinformationen der ersten Vorrichtung,
wobei die globalen Änderungsinformationen mindestens eines umfassen von: einem Anker-Masterrang (Anchor Master Rank, AMR); einem ersten Masterrang (first Master Rank), erster MR; einem ersten Zufallsfaktor (first Random Factor), erster RF; einer Übertragungszeit eines Anker-Masterbeacons, (Anchor Master Beacon Transmission Time, AMBTT); einem ersten Zeitsynchronisationsfunktionswert (first Time Synchronization Function value, erster TSF-Wert); oder einem Cluster-Grad, CG; und
wobei die Änderungsinformationen der ersten Vorrichtung mindestens eines umfassen von: einem zweiten MR; einer Schnittstellenadresse; einem zweiten TSF-Wert; oder einem zweiten RF; und
• Senden (102) einer Dienstnachricht an die zweite Vorrichtung, wobei die Dienstnachricht die erste Dienstkennung umfasst, und wobei die Dienstnachricht verwendet wird, um den Dienst anzufragen, der von der ersten Vorrichtung benötigt wird, oder den Dienst zu verbreiten, der von der ersten Vorrichtung unterstützt wird.

6. Verfahren nach Anspruch 5, wobei das Erzeugen der ersten Dienstkennung gemäß den Änderungsinformationen und gemäß den ersten Dienstinformationen umfasst:
Erzeugen eines Zuordnungswerts gemäß den Änderungsinformationen und gemäß den ersten Dienstinformationen; und Verwenden des Zuordnungswerts als die erste Dienstkennung; wobei die ersten Dienstinformationen umfassen: einen Dienstnamen;
einen Hashwert des Dienstnamens; oder eine Dienstnummer des Dienstnamens.

7. Verfahren nach einem der Ansprüche 5 bis 6, wobei das Erzeugen der ersten Dienstkennung gemäß den Änderungsinformationen und gemäß den ersten Dienstinformationen umfasst:
Ausführen einer Hash-Operation an Parametern, welche die Änderungsinformationen und die ersten Dienstinformationen aufweisen.

8. Verfahren nach einem der Ansprüche 5 bis 7, wobei das Erzeugen der ersten Dienstkennung gemäß den Änderungsinformationen und gemäß den ersten Dienstinformationen umfasst:
Ausführen eines SHA-256-Algorithmus, der eine Hash-Operation ist, an Parametern, welche die ersten Dienstinformationen und den ersten TSF-Wert aufweisen.

9. Verfahren nach einem der Ansprüche 5 bis 8, wobei die erste Dienstkennung mehrere Dienstkennungen umfasst, und wobei die mehreren Dienstkennungen gemäß verschiedenen ersten Dienstinformationen erzeugt werden und verwendet werden, um mehrere Dienste anzufragen, die von der ersten Vorrichtung benötigt werden, oder die mehreren Dienste zu verbreiten, die von der ersten Vorrichtung unterstützt werden.

10. Verfahren nach einem der Ansprüche 5 bis 9, das vor dem Senden der Dienstnachricht an die zweite Vorrichtung außerdem umfasst:
Erzeugen einer neuen Schnittstellenadresse und Einstellen einer Senderadresse, die in der Dienstnachricht enthalten ist, als die neue Schnittstellenadresse.

11. Vorrichtung zum Ausführen einer Diensterkennung in einem Nachbarwahrnehmungsnetzwerk (Neighbor Awareness Network, NAN), wobei die Vorrichtung eine zweite Vorrichtung ist und konfiguriert und vorgesehen ist zum Ausführen eines der Verfahren nach einem der Ansprüche 1 bis 4.

12. Vorrichtung zum Ausführen einer Diensterkennung in einem Nachbarwahrnehmungsnetzwerk (Neighbor Awareness Network, NAN), wobei die Vorrichtung eine erste Vorrichtung ist und konfiguriert und vorgesehen ist zum Ausführen eines der Verfahren nach einem der Ansprüche 5 bis 10.

## Revendications

1. Procédé de réalisation d'une découverte de service dans un réseau de reconnaissance du voisinage, NAN, mis en œuvre par un deuxième dispositif, le deuxième dispositif et un premier dispositif étant des dispositifs dans le NAN, le procédé comprenant :
• la réception (301) d'un message de service envoyé par le premier dispositif, le message de service comprenant un premier identificateur de service, le message de service étant utilisé pour requérir un service exigé par le premier dispositif ou diffuser un service pris en charge par le premier dispositif, le premier identificateur de service étant dépendant d'informations de modification et de premières informations de service dans le NAN, les premières informations de service étant des informations à propos du service requis par le premier dispositif ou des informations à propos du service pris en charge par le premier dispositif, les informations de modification étant des informations qui sont convenues à l'avance entre le premier dispositif et le deuxième dispositif et qui changent dynamiquement, et les informations de modification comprenant : des informations de modification globale dans le NAN ou des informations de modification du premier dispositif,
les informations de modification globale comprenant au moins l'un des éléments suivants :
un rang de maître d'ancrage, AMR, un premier rang de maître, premier MR, un premier facteur aléatoire, premier RF, un moment de transmission de balise de maître d'ancrage, AMBTT, une première valeur de fonction de synchronisation dans le temps, première valeur de TSF, ou une catégorie de grappe CG ; et
les informations de modification du premier dispositif comprenant au moins l'un des éléments suivants :
un deuxième MR, une adresse d'interface, une deuxième valeur de TSF ou un deuxième RF ;
• l'obtention (302) des informations de modification et la génération d'un deuxième identificateur de service en fonction des informations de modification et de deuxièmes informations de service, si les premières informations de service sont les informations à propos du service pris en charge par le premier dispositif, les deuxièmes informations de service correspondantes étant des informations à propos d'un service requis par le deuxième dispositif, ou si les premières informations de service sont les informations à propos du service requis par le premier dispositif, les deuxièmes informations de service correspondantes étant des informations à propos d'un service pris en charge par le deuxième dispositif ; et
• la mise en concordance (303) du premier identificateur de service et du deuxième identificateur de service et, si la mise en concordance est réussie, l'envoi d'un message de réponse de service au premier dispositif.

2. Procédé selon la revendication 1, la génération du deuxième identificateur de service en fonction des informations de modification et des deuxièmes informations de service comprenant :
la génération d'une valeur de mise en correspondance en fonction des informations de modification et des deuxièmes informations de service, et l'utilisation de la valeur de mise en correspondance comme le deuxième identificateur de service ;
les deuxièmes informations de service comprenant : un nom de service, une valeur de hachage du nom de service, ou un numéro de service du nom de service.

3. Procédé selon l'une quelconque des revendications 1 et 2, la génération du deuxième identificateur de service en fonction des informations de modification et des deuxièmes informations de service comprenant :
la réalisation d'une opération de hachage sur des paramètres incluant les informations de modification et les deuxièmes informations de service.

4. Procédé selon l'une quelconque des revendications 1 à 3, la génération du deuxième identificateur de service en fonction des informations de modification et des deuxièmes informations de service comprenant :
la réalisation d'un algorithme SHA 256, qui est une opération de hachage, sur des paramètres incluant les deuxièmes informations de service et la première valeur de TSF.

5. Procédé de réalisation d'une découverte de service dans un réseau de reconnaissance du voisinage, NAN, mis en œuvre par un premier dispositif, le premier dispositif et un deuxième dispositif étant des dispositifs dans le NAN, le procédé comprenant :
• l'obtention (101) d'informations de modification dans le NAN et la génération d'un premier identificateur de service en fonction des informations de modification et de premières informations de service, les premières informations de service étant des informations à propos d'un service pris en charge par le premier dispositif ou des informations à propos d'un service requis par le premier dispositif, les informations de modification étant des informations qui sont convenues à l'avance entre le premier dispositif et le deuxième dispositif et qui changent dynamiquement, et les informations de modification comprenant : des informations de modification globale dans le NAN ou des informations de modification du premier dispositif,
les informations de modification globale comprenant au moins l'un des éléments suivants :
un rang de maître d'ancrage, AMR, un premier rang de maître, premier MR, un premier facteur aléatoire, premier RF, un moment de transmission de balise de maître d'ancrage, AMBTT, une première valeur de fonction de synchronisation dans le temps, première valeur de TSF, ou une catégorie de grappe CG ; et
les informations de modification du premier dispositif comprenant au moins l'un des éléments suivants :
un deuxième MR, une adresse d'interface, une deuxième valeur de TSF ou un deuxième RF ; et
• l'envoi (102) d'un message de service au deuxième dispositif, le message de service comprenant le premier identificateur de service, et le message de service étant utilisé pour requérir le service exigé par le premier dispositif ou diffuser le service pris en charge par le premier dispositif.

6. Procédé selon la revendication 5, la génération du premier identificateur de service en fonction des informations de modification et des premières informations de service comprenant :
la génération d'une valeur de mise en correspondance en fonction des informations de modification et des premières informations de service, et l'utilisation de la valeur de mise en correspondance comme le premier identificateur de service ;
les premières informations de service comprenant : un nom de service, une valeur de hachage du nom de service, ou un numéro de service du nom de service.

7. Procédé selon l'une quelconque des revendications 5 et 6, la génération du premier identificateur de service en fonction des informations de modification et des premières informations de service comprenant :
la réalisation d'une opération de hachage sur des paramètres incluant les informations de modification et les premières informations de service.

8. Procédé selon l'une quelconque des revendications 5 à 7, la génération du premier identificateur de service en fonction des informations de modification et des premières informations de service comprenant :
la réalisation d'un algorithme SHA 256, qui est une opération de hachage, sur des paramètres incluant les premières informations de service et la première valeur de TSF.

9. Procédé selon l'une quelconque des revendications 5 à 8, le premier identificateur de service comprenant de multiples identificateurs de service et les multiples identificateurs de service étant générés en fonction de différentes premières informations de service, et étant utilisés pour requérir de multiples services exigés par le premier dispositif ou diffuser de multiples services pris en charge par le premier dispositif.

10. Procédé selon l'une quelconque des revendications 5 à 9, comprenant en outre, avant l'envoi du message de service au deuxième dispositif :
la génération d'une nouvelle adresse d'interface et le réglage d'une adresse d'émetteur comprise dans le message de service en tant que la nouvelle adresse d'interface.

11. Dispositif de réalisation d'une découverte de service dans un réseau de reconnaissance du voisinage, NAN, le dispositif étant un deuxième dispositif et étant configuré pour et destiné à mettre en œuvre l'un quelconque des procédés selon les revendications 1 à 4.

12. Dispositif de réalisation d'une découverte de service dans un réseau de reconnaissance du voisinage, NAN, le dispositif étant un premier dispositif et étant configuré pour et destiné à mettre en œuvre l'un quelconque des procédés selon les revendications 5 à 10.
